# EUROPEAN PATENT APPLICATION

(11) **EP 4 648 336 A1**
(43) Date of publication of application: **12.11.2025**
(21) Application number: 24738432.4
(22) Date of filing: 02.01.2024
(51) Int. Cl.: H04L 5/00

(54) **METHOD AND APPARATUS USED IN NODE FOR WIRELESS COMMUNICATION**

(30) Priority: 06.01.2023 CN 202310018159; 12.01.2023 CN 202310200144
(71) Applicant: Apogee Networks, LLC, Dallas, TX 75201 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2024/070057
(87) International publication number: WO 2024/146499

(57) **Abstract**

Disclosed in the present application are a method and apparatus used in a node for wireless communication. A first receiver receives a first signaling; and a first transmitter sends a PUSCH on at least one cell in a first cell set, wherein the first signaling is used for scheduling the sent PUSCH; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

## Description

### Technical Field

The present application relates to a transmission method and apparatus in a wireless communication system, in particular to a transmission method and apparatus for wireless signals in a wireless communication system supporting a cellular network.

### Background Art

In order to support eMBB (Enhanced Mobile Broadband), a large number of signalings need to be sent to complete scheduling of physical layer channels (such as PDSCH (Physical Downlink Shared CHannel), PUSCH (Physical Uplink Shared CHannel), etc.); and enhancement of scheduling signalings is an important aspect of system design.

### Summary of the Invention

Clarifying a relationship between the number of bits of a domain in signalings and a transform precoder is an important issue needing to be considered; and in view of the above problems, the present application discloses a solution. It should be noted that, in addition to the eMBB mentioned in the previous description, the present application is also applicable to other scenarios, such as URLLC (Ultra-Reliable Low-Latency Communications), Internet of Vehicles, Internet of Things, NTN (Non-Terrestrial Networks), MBS (Multicast Broadcast Services), XR (Extended Reality), eMTC (enhanced Machine-Type Communication), etc., and achieves similar technical effects. In addition, using a unified solution for different scenarios (including but not limited to eMBB, URLLC, Internet of Vehicles, Internet of Things, NTN, MBS, XR, and eMTC) also helps reduce hardware complexity and costs, or improve performance. In the case of no conflict, embodiments in any node of the present application and features in the embodiments can be applied to any other node. In the case of no conflict, embodiments of the present application and features in the embodiments can be arbitrarily combined with each other.

As one embodiment, the interpretation of the terminology in the present application refers to definitions of TS36 series of a standard protocol of 3GPP.

As one embodiment, the interpretation of the terminology in the present application refers to definitions of TS38 series of the standard protocol of 3GPP.

As one embodiment, the interpretation of the terminology in the present application refers to definitions of TS37 series of the standard protocol of 3GPP.

As one embodiment, the interpretation of the terminology in the present application refers to definitions of a standard protocol of the IEEE (Institute of Electrical and Electronics Engineers).

The present application discloses a method used in a first node for wireless communication, characterized by comprising:
receiving a first signaling; and
sending a PUSCH on at least one cell in a first cell set,
wherein the first signaling is used for scheduling the sent PUSCH; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

As one embodiment, the benefits of the above method comprise: saving signaling overhead while ensuring sufficient scheduling flexibility.

As one embodiment, the benefits of the above method comprise: avoiding ambiguity in understanding the first domain, and improving communication quality.

As one embodiment, the benefits of the above method comprise: improving the transmission performance of the first signaling.

As one embodiment, the benefits of the above method comprise: improving scheduling flexibility.

As one embodiment, the benefits of the above method comprise: optimizing tradeoff between the overhead of control information bits and the demodulation performance of the PUSCH, which is conducive to improving the overall performance of a system.

As one embodiment, the benefits of the above method comprise: good compatibility.

As one embodiment, the benefits of the above method comprise: small changes to an existing 3GPP standard, thereby reducing the workload of standardization.

According to one aspect of the present application, the above method is characterized in that,
when the transform precoder on any cell in the first cell set is disabled, the number of bits of the first domain in the first signaling is equal to 1.

As one embodiment, the benefits of the above method comprise: ensuring sufficient scheduling flexibility.

According to one aspect of the present application, the above method is characterized in that,
when the transform precoder on each cell in the first cell set is disabled, the number of bits of the first domain in the first signaling is greater than 0.

As one embodiment, the benefits of the above method comprise: ensuring sufficient scheduling flexibility.

According to one aspect of the present application, the above method is characterized in that,
the first domain is a DMRS sequence initialization domain.

According to one aspect of the present application, the above method is characterized in that,
a given cell is one cell in the first cell set, and the first signaling is used for scheduling at least one PUSCH sent on the given cell; and only when a transform precoder on the given cell is disabled, the first domain in the first signaling is applicable to the given cell.

As one embodiment, the benefits of the above method comprise: ensuring sufficient scheduling flexibility.

According to one aspect of the present application, the above method is characterized in that,
a given cell is one cell in the first cell set, and the first signaling is used for scheduling at least one PUSCH sent on the given cell; and when a transform precoder on at least one cell in the first cell set is disabled and a transform precoder on the given cell is enabled, the number of bits of the first domain in the first signaling is equal to 1, and the first domain in the first signaling is not applicable to the given cell.

As one embodiment, the benefits of the above method comprise: ensuring sufficient scheduling flexibility.

According to one aspect of the present application, the above method is characterized in that,
the first signaling is used for scheduling more than one PUSCH; when the more than one PUSCH overlaps with the first PUCCH in one slot, the more than one PUSCH is candidate PUSCHs; the first PUCCH carries UCI; and if the first node is to multiplex UCI into one of the candidate PUSCHs, the first node multiplexes the UCI into the PUSCH of a serving cell with a smallest serving cell index.

As one embodiment, the benefits of the above method comprise: improving the reporting performance of UCI (Uplink control information).

The present application discloses a method used in a second node for wireless communication, characterized by comprising:
sending a first signaling; and
receiving a PUSCH on at least one cell in a first cell set,
wherein the first signaling is used for scheduling the PUSCH on the at least one cell in the first cell set; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

According to one aspect of the present application, the above method is characterized in that,
when the transform precoder on any cell in the first cell set is disabled, the number of bits of the first domain in the first signaling is equal to 1.

According to one aspect of the present application, the above method is characterized in that,
when the transform precoder on each cell in the first cell set is disabled, the number of bits of the first domain in the first signaling is greater than 0.

According to one aspect of the present application, the above method is characterized in that,
the first domain is a DMRS sequence initialization domain.

According to one aspect of the present application, the above method is characterized in that,
a given cell is one cell in the first cell set, and the first signaling is used for scheduling at least one PUSCH on the given cell; and only when a transform precoder on the given cell is disabled, the first domain in the first signaling is applicable to the given cell.

According to one aspect of the present application, the above method is characterized in that,
a given cell is one cell in the first cell set, and the first signaling is used for scheduling at least one PUSCH on the given cell; and when a transform precoder on at least one cell in the first cell set is disabled and a transform precoder on the given cell is enabled, the number of bits of the first domain in the first signaling is equal to 1, and the first domain in the first signaling is not applicable to the given cell.

According to one aspect of the present application, the above method is characterized in that,
the first signaling is used for scheduling more than one PUSCH; when the more than one PUSCH overlaps with the first PUCCH in one slot, the more than one PUSCH is candidate PUSCHs; the first PUCCH carries UCI; and if a receiving end of the first signaling needs to multiplex UCI into one of the candidate PUSCHs, the receiving end of the first signaling multiplexes the UCI into the PUSCH of a serving cell with a smallest serving cell index.

The present application discloses a first node used for wireless communication, characterized by comprising:
a first receiver for receiving a first signaling; and
a first transmitter for sending a PUSCH on at least one cell in a first cell set,
wherein the first signaling is used for scheduling the sent PUSCH; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

The present application discloses a second node used for wireless communication, characterized by comprising:
a second transmitter for sending a first signaling; and
a second receiver for receiving a PUSCH on at least one cell in a first cell set,
wherein the first signaling is used for scheduling the PUSCH on the at least one cell in the first cell set; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

### Brief description of the drawings

Other features, purposes and advantages of the present application will become more apparent by reading the detailed description of the non-limiting embodiments in the following drawings with reference to them:
FIG. 1 shows a processing flow chart of a first node according to one embodiment of the present application;
FIG. 2 shows a schematic diagram of a network architecture according to one embodiment of the present application;
FIG. 3 shows a schematic diagram of a wireless protocol architecture of a user plane and a control plane according to one embodiment of the present application;
FIG. 4 shows a schematic diagram of a first communication device and a second communication device according to one embodiment of the present application;
FIG. 5 shows a signal transmission flow chart according to one embodiment of the present application;
FIG. 6 shows a schematic diagram of a relationship between the number of bits of a first domain in first signaling and a first cell set according to one embodiment of the present application;
FIG. 7 shows a schematic diagram of a relationship between the number of bits of a first domain in first signaling and a first cell set according to one embodiment of the present application;
FIG. 8 shows a schematic diagram of relationships among a first signaling, a first domain, and a given cell according to one embodiment of the present application;
FIG. 9 shows a schematic diagram of UCI multiplexing related to more than one PUSCH scheduled by a first signaling according to one embodiment of the present application;
FIG. 10 shows a structural block diagram of a processing device in a first node device according to one embodiment of the present application; and
FIG. 11 shows a structural block diagram of a processing device in a second node device according to one embodiment of the present application.

### Detailed Description of Embodiments

The technical solution of the present application will be further described in detail below in conjunction with the accompanying drawings. It should be noted that, in the case of no conflict, the embodiments of the present application and the features in the embodiments can be arbitrarily combined with each other.

### Embodiment 1

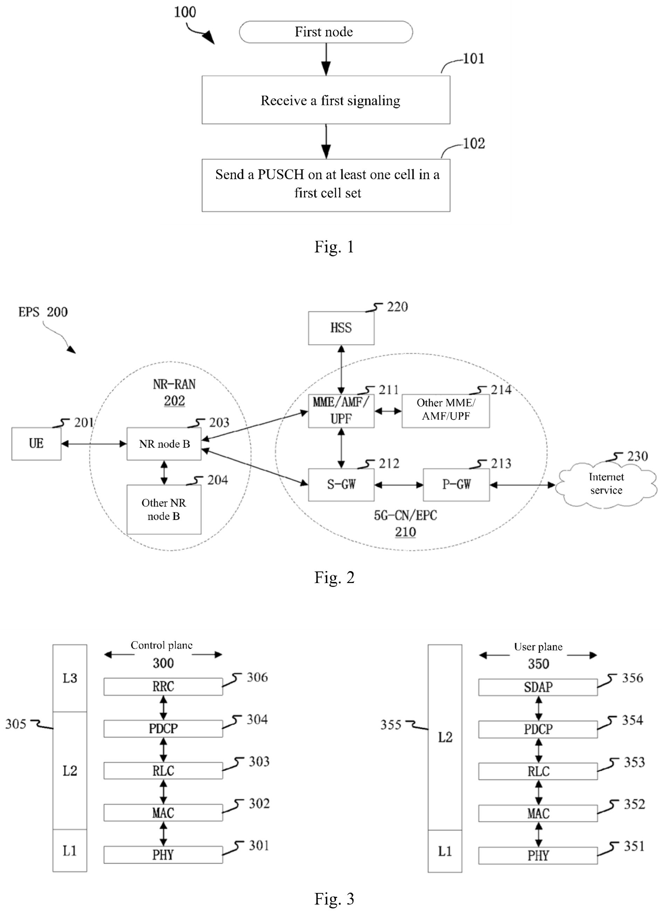

Embodiment 1 illustrates a processing flow chart of a first node according to one embodiment of the present application, as shown in FIG. 1.

In Embodiment 1, the first node in the present application receives a first signaling in step 101; and sends a PUSCH on at least one cell in a first cell set in step 102.

In Embodiment 1, the first signaling is used for scheduling the sent PUSCH; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

As one embodiment, the first signaling is an uplink scheduling signaling (Uplink Grant Signaling).

As one embodiment, the first signaling is DCI (Downlink control information).

As one embodiment, the first signaling is a DCI format.

As one embodiment, the first signaling is a DCI format 0_1.

As one embodiment, the first signaling is a DCI format 0_2.

As one embodiment, the first signaling adopts one of the DCI format 0_1 or the DCI format 0_2.

As one embodiment, the first signaling adopts a DCI format other than a DCI format 0_0, the DCI format 0_1 or the DCI format 0_2.

As one embodiment, the first signaling is a DCI format 0_3.

As one embodiment, the first signaling is a DCI format 0_4.

As one embodiment, the first signaling is a DCI format 0_5.

As one embodiment, the first signaling is a DCI format 0_6.

As one embodiment, the first signaling is a DCI format 0_7.

As one embodiment, the first signaling is a DCI format 0_8.

As one embodiment, the first signaling adopts the DCI format 0_3.

As one embodiment, the first signaling adopts the DCI format 0_4.

As one embodiment, the first signaling adopts the DCI format 0_5.

As one embodiment, the first signaling adopts the DCI format 0_6.

As one embodiment, the first signaling adopts the DCI format 0_7.

As one embodiment, the first signaling adopts the DCI format 0_8.

As one embodiment, the first signaling is DCI used for scheduling more than one serving cell at most.

As one embodiment, the first signaling is a DCI format used for scheduling more than one serving cell at most.

As one embodiment, the first signaling is DCI including a UL grant.

As one embodiment, the first signaling comprises at least one field in one DCI format.

As one embodiment, the first cell set is configurable.

As one embodiment, the first cell set is configured by an RRC signaling.

As one embodiment, the first cell set is configured by MAC CE.

As one embodiment, the first cell set comprises one cell that can be scheduled by one first-type signaling.

As one embodiment, the first cell set is indicated by the first signaling.

As one embodiment, the first signaling is one first-type signaling.

As one embodiment, the first-type signaling is configurable.

As one embodiment, the first-type signaling is an uplink scheduling signaling (UpLink Grant Signaling).

As one embodiment, the first-type signaling is DCI (Downlink control information).

As one embodiment, the first-type signaling is a DCI format.

As one embodiment, the first-type signaling is a DCI format 0_1.

As one embodiment, the first-type signaling is a DCI format 0_2.

As one embodiment, the first-type signaling adopts one of the DCI format 0_1 or the DCI format 0_2.

As one embodiment, the first-type signaling adopts a DCI format other than a DCI format 0_0, the DCI format 0_1 or the DCI format 0_2.

As one embodiment, the first-type signaling is a DCI format 0_3.

As one embodiment, the first-type signaling is a DCI format 0_4.

As one embodiment, the first-type signaling is a DCI format 0_5.

As one embodiment, the first-type signaling is a DCI format 0_6.

As one embodiment, the first-type signaling is a DCI format 0_7.

As one embodiment, the first-type signaling is a DCI format 0_8.

As one embodiment, the first-type signaling comprises the DCI format 0_0.

As one embodiment, the first-type signaling comprises the DCI format 0_1.

As one embodiment, the first-type signaling comprises the DCI format 0_2.

As one embodiment, the first-type signaling comprises the DCI format 0_3.

As one embodiment, the first-type signaling comprises the DCI format 0_4.

As one embodiment, the first-type signaling comprises the DCI format 0_5.

As one embodiment, the first-type signaling comprises the DCI format 0_6.

As one embodiment, the first-type signaling comprises the DCI format 0_7.

As one embodiment, the first-type signaling comprises the DCI format 0_8.

As one embodiment, the first-type signaling adopts the DCI format 0_3.

As one embodiment, the first-type signaling adopts the DCI format 0_4.

As one embodiment, the first-type signaling adopts the DCI format 0_5.

As one embodiment, the first-type signaling adopts the DCI format 0_6.

As one embodiment, the first-type signaling adopts the DCI format 0_7.

As one embodiment, the first-type signaling adopts the DCI format 0_8.

As one embodiment, the first-type signaling is DCI used for scheduling more than one serving cell at most.

As one embodiment, the first-type signaling is a DCI format used for scheduling more than one serving cell at most.

As one embodiment, the first-type signaling is DCI including a UL grant.

As one embodiment, the first-type signaling comprises at least one field in one DCI format.

As one embodiment, one cell in the first cell set is one serving cell.

As one embodiment, a PUSCH sent on one cell in the first cell set is a PUSCH sent on an active BWP (Bandwidth part) of the cell.

As one embodiment, based on scheduling of the first signaling, the first node sends at least one PUSCH (Physical uplink shared channel) on only one cell in the first cell set.

As one embodiment, based on scheduling of the first signaling, the first node sends at least one PUSCH on each cell in more than one cell in the first cell set.

As one embodiment, the statement "sending a PUSCH" comprises the following meaning: sending a signal in the PUSCH.

As one embodiment, the statement "sending a PUSCH" comprises the following meaning: sending a bit block on the PUSCH.

As one embodiment, the statement "sending a PUSCH" comprises the following meaning: sending at least one of transport block(s) or CSI report(s) on the PUSCH.

As one embodiment, the statement "sending a PUSCH" comprises the following meaning: performing PUSCH transmission once.

As one embodiment, the statement "sending a PUSCH" comprises: there is at least one of the transport block(s) or CSI report(s) undergoing at least part of CRC attachment, code block segmentation, code block CRC (Cyclic redundancy check) attachment, channel coding, rate matching, code block concatenation, scrambling, modulation, layer mapping, transform precoding, precoding, mapping to virtual resource blocks, mapping from virtual to physical resource blocks, multi-carrier symbol generation, and modulation up-conversion, and then is sent on the PUSCH.

As one embodiment, the statement "sending a PUSCH" comprises: coded bits of at least one of transport block(s) or CSI report(s) undergo at least part of scrambling, modulation, layer mapping, antenna port mapping, mapping to virtual resource blocks, mapping from virtual to physical resource blocks, multi-carrier symbol generation, and modulation up-conversion, and then are sent on the PUSCH.

As one embodiment, the statement "sending a PUSCH" comprises: there is at least one of transport block(s) or CSI report(s) undergoing at least part of CRC attachment, code block segmentation, code block CRC attachment, channel coding, rate matching, code block concatenation, scrambling, modulation, layer mapping, precoding, antenna port mapping, mapping to virtual resource blocks, mapping from virtual to physical resource blocks, multi-carrier symbol generation, and modulation up-conversion, and then being sent on the PUSCH.

As one embodiment, one field in the first signaling indicates a time domain resource occupied by a PUSCH sent on one cell in the first cell set.

As one embodiment, one field in the first signaling indicates a frequency domain resource occupied by a PUSCH sent on one cell in the first cell set.

As one embodiment, one field in the first signaling indicates a spatial domain resource occupied by a PUSCH sent on one cell in the first cell set.

As one embodiment, the statement "the first signaling is used for scheduling the sent PUSCH" comprises: the first signaling is used for scheduling the PUSCH on each cell in the at least one cell in the first cell set.

As one embodiment, the statement "the first signaling is used for scheduling the sent PUSCH" means: the first signaling is used for scheduling the PUSCH on each cell in the at least one cell in the first cell set.

As one embodiment, the statements "the first signaling is used for scheduling the sent PUSCH" and "the first signaling is used for scheduling at least one PUSCH" in the present application are equivalent or interchangeable.

As one embodiment, the statements "the first signaling is used for scheduling the sent PUSCH" and "the first signaling is used for scheduling a PUSCH on each cell in the at least one cell in the first cell set" in the present application are equivalent or interchangeable.

As one embodiment, the statements
"(first transmitter) for sending a PUSCH on at least one cell in a first cell set,
wherein the first signaling is used for scheduling the sent PUSCH" and "wherein the first signaling is used for scheduling a PUSCH in each cell in at least one cell in the first cell set" in the present application are equivalent or interchangeable.

As one embodiment, the statements "the first signaling is used for scheduling the sent PUSCH" and "the first signaling is used for scheduling a PUSCH on the at least one cell in the first cell set" in the present application are equivalent or interchangeable.

As one embodiment, the statements
"(first transmitter) for sending a PUSCH on at least one cell in a first cell set,
wherein the first signaling is used for scheduling the sent PUSCH" and "wherein the first signaling is used for scheduling a PUSCH on at least one cell in the first cell set" in the present application are equivalent or interchangeable.

As one embodiment, the number of bits of the first domain in the first signaling is related to a transform precoder.

As one embodiment, the number of bits of the first domain in the first signaling is related to whether the transform precoder is enabled or not.

As one embodiment, the statement "the number of bits of a first domain in the first signaling is related to the first cell set" means: the number of bits of the first domain in the first signaling is related to at least one cell in the first cell set.

As one embodiment, the number of bits of the first domain in the first signaling is related to each cell in the first cell set.

As one embodiment, the first domain comprises at most 1 bit.

As one embodiment, the first domain comprises at most 2 bits.

As one embodiment, the first domain comprises at most 6 bits.

As one embodiment, the first domain comprises a non-negative integer number of bits.

As one embodiment, the first domain is one field in the DCI format 0_1.

As one embodiment, the first domain is one field in the DCI format 0_2.

As one embodiment, the first domain is one field in the DCI format 0_3.

As one embodiment, the first domain is one field in the DCI format 0_4.

As one embodiment, the first domain is one field in the DCI format 0_5.

As one embodiment, the first domain is one field in the DCI format 0_6.

As one embodiment, the first domain is one field in the DCI format 0_7.

As one embodiment, the first domain is one field in the DCI format 0_8.

As one embodiment, the first domain is a field related to a DMRS (Demodulation reference signal).

As one embodiment, when the first domain in the first signaling comprises 1 bit, and the first domain in the first signaling is used for generation of a DMRS sequence.

As one embodiment, the first domain is a DMRS sequence initialization field.

As one embodiment, when one transform precoder on one cell in the first cell set is disabled, transform precoding on this cell is disabled.

As one embodiment, when one transform precoder on one cell in the first cell set is enabled, transform precoding on this cell is enabled.

As one embodiment, the statement "a transform precoder on each cell in the first cell set is enabled" comprises: for each cell in the first cell set, the transform precoder is enabled.

As one embodiment, the statement "a transform precoder on each cell in the first cell set is enabled" comprises: for an active uplink BWP of each cell in the first cell set, the transform precoder is enabled.

As one embodiment, the statement "a transform precoder on each cell in the first cell set is enabled" comprises: for PUSCH sending on each cell in the first cell set, the transform precoder is enabled.

As one embodiment, the statement "a transform precoder on each cell in the first cell set is enabled" comprises: for a PUSCH scheduled by a first-type signaling on each cell in the first cell set, the transform precoder is enabled.

As one embodiment, the statement "a transform precoder on each cell in the first cell set is enabled" comprises: each parameter in a first parameter set is respectively a parameter in a configuration of an active uplink BWP of one cell in the first cell set, and each parameter in the first parameter set indicates enabling the transform precoder.

As one embodiment, the statement "a transform precoder on each cell in the first cell set is enabled" comprises: the transform precoder is configured to be enabled in a configuration of an active uplink BWP of each cell in the first cell set.

As one embodiment, the statements "a transform precoder on each cell in the first cell set is enabled" and "for each cell in the first cell set, a transform precoder is enabled" in the present application are equivalent or interchangeable.

As one embodiment, the statements "a transform precoder on each cell in the first cell set is enabled" and "for an active uplink BWP of each cell in the first cell set, a transform precoder is enabled" in the present application are equivalent or interchangeable.

As one embodiment, the statements "a transform precoder on each cell in the first cell set is enabled" and "for PUSCH sending on each cell in the first cell set, a transform precoder is enabled" in the present application are equivalent or interchangeable.

As one embodiment, the statements "a transform precoder on each cell in the first cell set is enabled" and "for a PUSCH scheduled by a first-type signaling on each cell in the first cell set, a transform precoder is enabled" in the present application are equivalent or interchangeable.

As one embodiment, the statements "a transform precoder on each cell in the first cell set is enabled" and "each parameter in the first parameter set is respectively a parameter in a configuration of an active uplink BWP of one cell in the first cell set, and each parameter in the first parameter set indicates enabling a transform precoder" in the present application are equivalent or interchangeable.

As one embodiment, the statements "a transform precoder on each cell in the first cell set is enabled" and "a transform precoder is configured to be enabled in a configuration of an active uplink BWP of each cell in the first cell set" in the present application are equivalent or interchangeable.

As one embodiment, the statement "the number of bits of the first domain in the first signaling is equal to 0" comprises: the first signaling does not comprise the first domain.

As one embodiment, the statement "the number of bits of the first domain in the first signaling is equal to 0" means: the first signaling does not comprise the first domain.

As one embodiment, the first signaling is used for indicating on which cell/cells in the first cell set a PUSCH is sent.

As one embodiment, one field other than the first domain in the first signaling indicates on which cell/cells in the first cell set a PUSCH is sent.

As one embodiment, when a transform precoder on any cell in the first cell set is enabled, the number of bits of the first domain in the first signaling is equal to 0.

As one embodiment, the statement "a transform precoder on any cell in the first cell set is enabled" comprises: for any cell in the first cell set, the transform precoder is enabled.

As one embodiment, the statement "a transform precoder on any cell in the first cell set is enabled" comprises: for an active uplink BWP of any cell in the first cell set, the transform precoder is enabled.

As one embodiment, the statement "a transform precoder on any cell in the first cell set is enabled" comprises: for PUSCH sending on any cell in the first cell set, the transform precoder is enabled.

As one embodiment, the statement "a transform precoder on any cell in the first cell set is enabled" comprises: for a PUSCH scheduled by a first-type signaling on any cell in the first cell set, the transform precoder is enabled.

As one embodiment, the statement "a transform precoder on any cell in the first cell set is enabled" comprises: each parameter in the first parameter set is respectively a parameter in a configuration of an active uplink BWP of one cell in the first cell set, and any parameter in the first parameter set indicates enabling the transform precoder.

As one embodiment, the statement "a transform precoder on any cell in the first cell set is enabled" comprises: the transform precoder is configured to be enabled in a configuration of an active uplink BWP of any cell in the first cell set.

As one embodiment, the statements "a transform precoder on any cell in the first cell set is enabled" and "for any cell in the first cell set, a transform precoder is enabled" in the present application are equivalent or interchangeable.

As one embodiment, the statements "a transform precoder on any cell in the first cell set is enabled" and "for an active uplink BWP of any cell in the first cell set, a transform precoder is enabled" in the present application are equivalent or interchangeable.

As one embodiment, the statements "the transform precoder on any cell in the first cell set is enabled" and "for PUSCH sending on any cell in the first cell set, a transform precoder is enabled" in the present application are equivalent or interchangeable.

As one embodiment, the statements "a transform precoder on any cell in the first cell set is enabled" and "for a PUSCH scheduled by a first-type signaling on any cell in the first cell set, a transform precoder is enabled" in the present application are equivalent or interchangeable.

As one embodiment, the statements "a transform precoder on any cell in the first cell set is enabled" and "each parameter in a first parameter set is respectively a parameter in a configuration of an active uplink BWP of one cell in the first cell set, and any parameter in the first parameter set indicates enabling the transform precoder" in the present application are equivalent or interchangeable.

As one embodiment, the statements "a transform precoder on any cell in the first cell set is enabled" and "a transform precoder is configured to be enabled in a configuration of an active uplink BWP of any cell in the first cell set" in the present application are equivalent or interchangeable.

As one embodiment, with respect to whether a transform precoder is enabled or not, the first node expects that all cells in the first cell set have the same configuration.

As one embodiment, with respect to whether a transform precoder is enabled or not, the first node does not expect that cells in the first cell set have different configurations.

As one embodiment, a given cell is one cell in the first cell set, and the first signaling is used for scheduling at least one PUSCH sent on the given cell; for PUSCH transmission on the given cell, when corresponding transform precoding is not enabled: for UL (Uplink) transmission based on partial coherent and non-coherent codebooks, an actual number of UL phase-tracking reference signal (PT-RS) ports is determined based on TPMI and/or the number of layers indicated by a second domain in the first signaling; and the second domain is a precoding information and number of layers field.

As one sub-embodiment of the above embodiment, if a higher layer parameter maxNrpPorts in PTRS-UplinkConfig configured for the first node is set to "n2", actual UL phase-tracking reference signal ports and associated transmission layers are derived from indicated TPMI as follows:

PUSCH antenna ports 1000 and 1002 in the indicated TPMI share a PT-RS port 0, and PUCH antenna ports 1001 and 1003 in the indicated TPMI share a PTR-s port 1; and

the UL phase-tracking reference signal port 0 is associated with a UL layer 'x' in a layer transmitted through the PUSCH antenna ports 1000 and 1002 in the indicated TPMI, and the UL phase-tracking reference signal port 1 is associated with a UL layer 'y' in a layer transmitted through the PUSCH antenna ports 1001 and 1003 in the indicated TPMI, wherein 'x' and/or 'y' are given by a DCI parameter "PTRS-DMRS association" in the first signaling.

As one embodiment, for each cell in the first cell set, there is at least one corresponding precoding information and number of layers field in the first signaling.

As one embodiment, the benefits of the above method comprise: ensuring scheduling flexibility and PUSCH reception performance at the same time, which is conducive to optimizing system performance.

As one embodiment, the TPMI is a transmission PMI (Precoding matrix indicator).

As one embodiment, when the number of bits of the first domain in the first signaling is greater than 0: the position of the first domain in the first signaling in the first signaling depends on whether a transform precoder on at least one cell in the first cell set is enabled or not.

As one embodiment, when the number of bits of the first domain in the first signaling is greater than 0: whether a transform precoder on at least one cell in the first cell set is enabled or not is used for indicating the position of the first domain in the first signaling in the first signaling.

As one embodiment, when the number of bits of the first domain in the first signaling is greater than 0: whether a transform precoder on at least one cell in the first cell set is enabled or not implicitly indicates the position of the first domain in the first signaling in the first signaling.

As one embodiment, when the number of bits of the first domain in the first signaling is greater than 0: according to a predefined mapping rule, the position of the first domain in the first signaling in the first signaling is determined by a configuration of whether a transform precoder on a cell in the first cell set is enabled or not.

As one embodiment, if a transform precoder on each cell in the first cell set is enabled, the number of bits of the first domain in the first signaling is equal to 0; and otherwise, the number of bits of the first domain in the first signaling is equal to 1.

### Embodiment 2

Embodiment 2 illustrates a schematic diagram of one network architecture according to the present application, as shown in FIG. 2.

FIG. 2 illustrates a diagram of a network architecture 200 of a 5G NR, LTE (Long-Term Evolution) and LTE-A (Long-Term Evolution Advanced) system. The 5G NR or LTE network architecture 200 may be referred to as EPS (Evolved Packet System) 200 or some other suitable terms. The EPS 200 may comprise one or more pieces of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet service 230. The EPS may be interconnected with other access networks, but these entities/interfaces are not shown for simplicity. As shown in the figure, the EPS provides packet switching services, but those skilled in the art will readily appreciate that various concepts presented throughout the present application may be extended to networks providing circuit switching services or other cellular networks. The NG-RAN comprises an NR node B (gNB) 203 and other gNB204. The gNB203 provides user and control plane protocol termination toward the UE201. The gNB203 may be connected to other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP (transmitter receiver point), or some other suitable terms. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted through the S-GW212, wherein the S-GW212 itself is connected to the P-GW213. The P-GW213 provides UE IP address allocation and other functions. The P-GW213 is connected to the Internet service 230. The Internet service 230 comprises operator-corresponding Internet protocol services, which may specifically comprise Internet, intranet, IMS (IP Multimedia Subsystem) and packet switching streaming services.

As one embodiment, the UE201 corresponds to the first node in the present application.

As one embodiment, the UE201 corresponds to the second node in the present application.

As one embodiment, the UE201 is UE.

As one embodiment, the UE201 is UE that supports a single DCI to schedule multiple cells.

As one embodiment, the UE201 is conventional UE.

As one embodiment, the UE201 is UE with high processing capability.

As one embodiment, the gNB203 corresponds to the first node in the present application.

As one embodiment, the gNB203 corresponds to the second node in the present application.

As one embodiment, the UE201 corresponds to the first node in the present application, and the gNB203 corresponds to the second node in the present application.

As one embodiment, the gNB203 is a macrocellular base station.

As one embodiment, the gNB203 is a micro cell base station.

As one embodiment, the gNB203 is a picocell base station.

As one embodiment, the gNB203 is a home base station (Femtocell).

As one embodiment, the gNB203 is a base station device that supports large latency difference.

As one embodiment, the gNB203 is a flying platform device.

As one embodiment, the gNB203 is a satellite device.

As one embodiment, the gNB203 is a base station activating network energy saving enhancement.

As one embodiment, the first node and the second node in the present application both correspond to the UE201, for example, V2X communication is performed between the first node and the second node.

### Embodiment 3

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for a first communication node device (UE, gNB or RSU in V2X) and a second communication node device (gNB, UE or RSU in V2X), or the control plane 300 between two pieces of UE using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above PHY301, and is responsible for links between the first communication node device and the second communication node device and two pieces of UE through the PHY301. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operation. An RRC (Radio Resource Control) sublayer 306 in Layer 3 (L3 layer) in the control plane 300 is responsible for acquiring radio resources (i.e., radio bearers) and configuring a lower layer using an RRC signaling between the second communication node device and the first communication node device. The radio protocol architecture of the user plane 350 comprises Layer 1 (L1 layer) and Layer 2 (L2 layer). The radio protocol architecture for the first communication node device and the second communication node device in the user plane 350 is substantially the same as corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, including a network layer (e.g., an IP layer) terminating at a P-GW on a network side and an application layer terminating at another end (e.g., remote UE, a server, etc.) of connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first signaling in the present application is generated in the RRC sublayer 306.

As one embodiment, the first signaling in the present application is generated in the MAC sublayer 302.

As one embodiment, the first signaling in the present application is generated in the PHY301.

### Embodiment 4

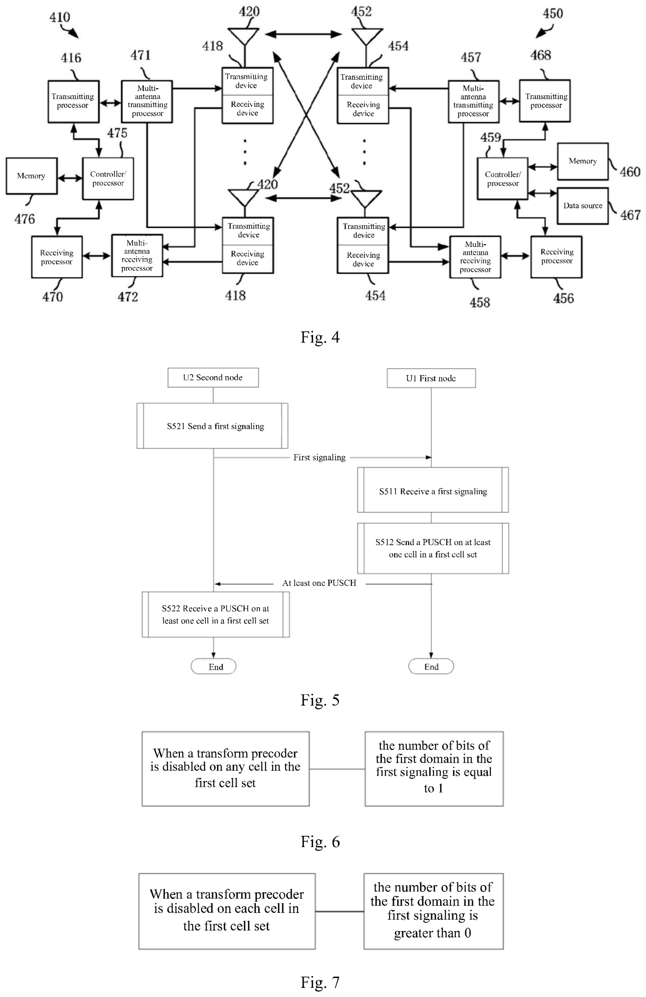

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, an upper layer data packet from a core network is provided to the controller/processor 475. The controller/processor 475 implements the functionality of the L2 layer. In the transmission from the first communication device 410 to the first communication device 450, the controller/processor 475 provides header compression, encryption, packet segmentation and reordering, multiplexing between logical and transport channels, and radio resource allocation to the second communication device 450 based on various priority metrics. The controller/processor 475 is also responsible for the retransmission of lost packets and the signaling to the second communication device 450. The transmitting processor 416 and the multi-antenna transmitting processor 471 implement various signal processing functions for the L1 layer (i.e., physical layer). The transmitting processor 416 implements encoding and interleaving to facilitate forward error correction (FEC) at the second communication device 450, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, including codebook-based precoding and non-codebook-based precoding, and beamforming processing on coded and modulated symbols to generate one or more spatial streams. The transmitting processor 416 then maps each spatial stream to a subcarrier, multiplexes with a reference signal (e.g., a pilot) in a time domain and/or frequency domain, and then uses an inverse fast Fourier transform (IFFT) to generate a physical channel carrying a time domain multi-carrier symbol stream. The multi-antenna transmitting processor 471 then performs sending analog precoding/beamforming operation on the time domain multi-carrier symbol stream. Each transmitting device 418 converts a baseband multi-carrier symbol stream provided by the multi-antenna transmitting processor 471 into a radio frequency stream, and then provides it to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, and converts a radio frequency stream into a baseband multi-carrier symbol stream and provides it to the receiving processor 456. The receiving processor 456 and the multi-antenna receiving processor 458 implement various signal processing functions of the L1 layer. The multi-antenna receiving processor 458 performs receiving analog precoding/beamforming operation on the baseband multi-carrier symbol stream from the receiving device 454. The receiving processor 456 uses a Fast Fourier Transform (FFT) to convert the baseband multi-carrier symbol stream subjected to the receiving analog precoding/beamforming operation from the time domain to the frequency domain. In the frequency domain, a physical layer data signal and the reference signal are demultiplexed by the receiving processor 456, wherein the reference signal will be used for channel estimation, and after the data signal is detected by multiple antennas in the multi-antenna receiving processor 458, any spatial stream destined for the second communication device 450 is recovered. Symbols on each spatial stream are demodulated and recovered in the receiving processor 456, and a soft decision is generated. The receiving processor 456 then decodes and deinterleaves the soft decision to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores a program code and data. The memory 460 may be referred to as computer-readable media. In the transmission from the first communication device 410 to the second communication device 450, the controller/processor 459 provides demultiplexing between transport and logical channels, packet reassembly, decryption, header decompression, and control signal processing to recover upper layer data packets from the core network. The upper layer data packets are then provided to all protocol layers above the L2 layer. Various control signals may also be provided to L3 for L3 processing.

In the transmission from the second communication device 450 to the first communication device 410, at the second communication device 450, the upper layer data packets are provided to the controller/processor 459 using the data source 467. The data source 467 represents all protocol layers above the L2 layer. Similar to a sending function at the first communication device 410 described in the transmission from the first communication device 410 to the second communication device 450, the controller/processor 459 implements header compression, encryption, packet segmentation and reordering, and multiplexing between logical and transport channels based on radio resource allocation, implementing L2 layer functions for a user plane and a control plane. The controller/processor 459 is also responsible for the retransmission of lost packets and the signaling to the first communication device 410. The transmitting processor 468 performs modulation mapping and channel coding processing, and the multi-antenna transmitting processor 457 performs digital multi-antenna spatial precoding, including codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operation in the multi-antenna transmitting processor 457. Each transmitting device 454 first converts the baseband symbol stream provided by the multi-antenna transmitting processor 457 into a radio frequency symbol stream, and then provides it to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores a program code and data. The memory 476 may be referred to as computer-readable media. In the transmission from the second communication device 450 to the first communication device 410, the controller/processor 475 provides demultiplexing between transport and logical channels, packet reassembly, decryption, header decompression, and control signal processing to recover upper layer data packets from the UE450. The upper layer data packets from the controller/processor 475 can be provided to the core network.

As one embodiment, the first node in the present application comprises the second communication device 450, and the second node in the present application comprises the first communication device 410.

As one sub-embodiment of the above embodiment, the first node is user equipment, and the second node is user equipment.

As one sub-embodiment of the above embodiment, the first node is user equipment, and the second node is a relay node.

As one sub-embodiment of the above embodiment, the first node is a relay node, and the second node is user equipment.

As one sub-embodiment of the above embodiment, the first node is user equipment, and the second node is a base station device.

As one sub-embodiment of the above embodiment, the first node is a relay node, and the second node is a base station device.

As one sub-embodiment of the above embodiment, the second node is user equipment, and the first node is a base station device.

As one sub-embodiment of the above embodiment, the second node is a relay node, and the first node is a base station device.

As one sub-embodiment of the above embodiment, the second communication device 450 comprises: at least one controller/processor; and the at least one controller/processor is responsible for HARQ operation.

As one sub-embodiment of the above embodiment, the first communication device 410 comprises: at least one controller/processor; and the at least one controller/processor is responsible for HARQ operation.

As one sub-embodiment of the above embodiment, the first communication device 410 comprises: at least one controller/processor; and the at least one controller/processor is responsible for error detection using positive acknowledgment (ACK) and/or negative acknowledgment (NACK) protocol to support HARQ operation.

As one embodiment, the second communication device 450 comprises: at least one processor and at least one memory, the at least one memory including a computer program code; and the at least one memory and the computer program code are configured to be used together with the at least one processor. The second communication device 450 apparatus at least: receives first signaling; and sends a PUSCH on at least one cell in a first cell set, wherein the first signaling is used for scheduling the sent PUSCH; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

As one sub-embodiment of the above embodiment, the second communication device 450 corresponds to the first node in the present application.

As one embodiment, the second communication device 450 comprises: a memory storing a computer-readable instruction program, wherein the computer-readable instruction program generates an action when executed by at least one processor, and the action comprises: receiving first signaling; and sending a PUSCH on at least one cell in a first cell set, wherein the first signaling is used for scheduling the sent PUSCH; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

As one sub-embodiment of the above embodiment, the second communication device 450 corresponds to the first node in the present application.

As one embodiment, the first communication device 410 comprises: at least one processor and at least one memory, the at least one memory including a computer program code; and the at least one memory and the computer program code are configured to be used together with the at least one processor. The first communication device 410 apparatus at least: sends first signaling; and receives a PUSCH on at least one cell in a first cell set, wherein the first signaling is used for scheduling the PUSCH on the at least one cell in the first cell set; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

As one sub-embodiment of the above embodiment, the first communication device 410 corresponds to the second node in the present application.

As one embodiment, the first communication device 410 comprises: a memory storing a computer-readable instruction program, wherein the computer-readable instruction program generates an action when executed by at least one processor, and the action comprises: sending first signaling; and receiving a PUSCH on at least one cell in a first cell set, wherein the first signaling is used for scheduling the PUSCH on the at least one cell in the first cell set; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first signaling in the present application.

As one embodiment, at least one of {the antenna 420, the transmitting device 418, the multi-antenna transmitting processor 471, the transmitting processor 416, the controller/processor 475, and the memory 476} is used for sending the first signaling in the present application.

As one embodiment, at least one of {the antenna 452, the transmitting device 454, the multi-antenna transmitting processor 458, the transmitting processor 468, the controller/processor 459, the memory 460, and the data source 467} is used for sending the PUSCH in the present application.

As one embodiment, at least one of {the antenna 420, the receiving device 418, the multi-antenna receiving processor 472, the receiving processor 470, the controller/processor 475, and the memory 476} is used for receiving the PUSCH in the present application.

### Embodiment 5

Embodiment 5 illustrates a signal transmission flow chart according to one embodiment of the present application, as shown in FIG. 5. In FIG. 5, a first node U1 and a second node U2 communicate through an air interface.

The first node U1 receives a first signaling in step S511; and sends a PUSCH on at least one cell in a first cell set in step S512.

The second node U2 sends the first signaling in step S521; and receives the PUSCH on at least one cell in the first cell set in step S522.

In Embodiment 5, the first signaling is used for scheduling the sent PUSCH; the first cell set comprises a plurality of cells, and the number of bits of a first domain in the first signaling is related to the first cell set; when a transform precoder on each cell in the first cell set is enabled, the number of bits of the first domain in the first signaling is equal to 0; when a transform precoder on any cell in the first cell set is disabled, the number of bits of the first domain in the first signaling is equal to 1; and the first domain is a DMRS sequence initialization domain.

As one sub-embodiment of Embodiment 5, the first signaling is used for scheduling more than one PUSCH; when the more than one PUSCH overlaps with the first PUCCH in one slot, the more than one PUSCH is candidate PUSCHs; the first PUCCH carries UCI; and if the first node U1 needs to multiplex UCI into one of the candidate PUSCHs, the first node U1 multiplexes the UCI into the PUSCH of a serving cell with the smallest serving cell index.

As one sub-embodiment of Embodiment 5, a given cell is any cell in the first cell set, and the first signaling is used for scheduling at least one PUSCH sent on the given cell; and only when a transform precoder on the given cell is disabled, the first domain in the first signaling is applicable to the given cell.

As one embodiment, the first node U1 is the first node in the present application.

As one embodiment, the second node U2 is the second node in the present application.

As one embodiment, the first node U1 is one piece of UE.

As one embodiment, the first node U1 is one base station.

As one embodiment, the second node U2 is one base station.

As one embodiment, the second node U2 is one piece of UE.

As one embodiment, an air interface between the second node U2 and the first node U1 is a Uu interface.

As one embodiment, an air interface between the second node U2 and the first node U1 comprises a cellular link.

As one embodiment, an air interface between the second node U2 and the first node U1 is a PC5 interface.

As one embodiment, an air interface between the second node U2 and the first node U1 comprises a side link.

As one embodiment, an air interface between the second node U2 and the first node U1 comprises a wireless interface between a base station device and user equipment.

As one embodiment, an air interface between the second node U2 and the first node U1 comprises a wireless interface between a satellite device and user equipment.

As one embodiment, an air interface between the second node U2 and the first node U1 comprises a wireless interface between user equipment and user equipment.

As one embodiment, a problem to be solved by the present application comprises: how to save signaling overhead while ensuring sufficient scheduling flexibility.

As one embodiment, a problem to be solved by the present application comprises: how to determine the number of bits of the first domain in the first signaling.

As one embodiment, a problem to be solved by the present application comprises: how to determine a relationship between the number of bits of the first domain in the first signaling and a transform precoder.

As one embodiment, a problem to be solved by the present application comprises: for a DCI format that can schedule more than one cell at most, how to determine the number of bits of a field.

As one embodiment, a problem to be solved by the present application comprises: how to optimize the number of bits of a field in a DCI format.

As one embodiment, a problem to be solved by the present application comprises: how to optimize the use of bits of a field in the DCI format.

As one embodiment, a problem to be solved by the present application comprises: how to optimize tradeoff between the overhead of control information bits and the demodulation performance of a PUSCH.

As one embodiment, a problem to be solved by the present application comprises: how to improve scheduling flexibility.

As one embodiment, a problem to be solved by the present application comprises: how to enhance the scheduling of a PUSCH.

As one embodiment, a problem to be solved by the present application comprises: how to optimize an indication behavior of DMRS sequence related information under different configurations for a transform precoder.

### Embodiment 6

Embodiment 6 illustrates a schematic diagram of a relationship between the number of bits of a first domain in a first signaling and a first cell set according to one embodiment of the present application, as shown in FIG. 6.

In Embodiment 6, when a transform precoder on any cell in the first cell set is disabled, the number of bits of the first domain in the first signaling is equal to 1.

As one embodiment, the statement "a transform precoder on any cell in the first cell set is disabled" comprises: for any cell in the first cell set, the transform precoder is disabled.

As one embodiment, the statement "a transform precoder on any cell in the first cell set is disabled" comprises: for an active uplink BWP of any cell in the first cell set, the transform precoder is disabled.

As one embodiment, the statement "a transform precoder on any cell in the first cell set is disabled" comprises: for PUSCH sending on any cell in the first cell set, the transform precoder is disabled.

As one embodiment, the statement "a transform precoder on any cell in the first cell set is disabled" comprises: for a PUSCH scheduled by first-type signaling on any cell in the first cell set, the transform precoder is disabled.

As one embodiment, the statement "a transform precoder on any cell in the first cell set is disabled" comprises: each parameter in a first parameter set is respectively a parameter in a configuration of an active uplink BWP of one cell in the first cell set, and any parameter in the first parameter set indicates disabling the transform precoder.

As one embodiment, the statement "a transform precoder on any cell in the first cell set is disabled" comprises: the transform precoder is configured to be disabled in a configuration of an active uplink BWP of any cell in the first cell set.

As one embodiment, the statements "a transform precoder on any cell in the first cell set is disabled" and "for any cell in the first cell set, a transform precoder is disabled" in the present application are equivalent or interchangeable.

As one embodiment, the statements "a transform precoder on any cell in the first cell set is disabled" and "for an active uplink BWP of any cell in the first cell set, the transform precoder is disabled" in the present application are equivalent or interchangeable.

As one embodiment, the statements "a transform precoder on any cell in the first cell set is disabled" and "for PUSCH sending on any cell in the first cell set, the transform precoder is disabled" in the present application are equivalent or interchangeable.

As one embodiment, the statements "a transform precoder on any cell in the first cell set is disabled" and "for a PUSCH scheduled by first-type signaling on any cell in the first cell set, the transform precoder is disabled" in the present application are equivalent or interchangeable.

As one embodiment, the statements "a transform precoder in any cell in the first cell set is disabled" and "each parameter in a first parameter set is respectively a parameter in a configuration of an active uplink BWP of one cell in the first cell set, and any parameter in the first parameter set indicates disabling the transform precoder" in the present application are equivalent or interchangeable.

As one embodiment, the statements "a transform precoder in any cell in the first cell set is disabled" and "a transform precoder is configured to be disabled in a configuration of an active uplink BWP of any cell in the first cell set" in the present application are equivalent or interchangeable.

### Embodiment 7

Embodiment 7 illustrates a schematic diagram of a relationship between the number of bits of a first domain in a first signaling and a first cell set according to one embodiment of the present application, as shown in FIG. 7.

In Embodiment 7, when a transform precoder in each cell in the first cell set is disabled, the number of bits of the first domain in the first signaling is greater than 0.

As one embodiment, the statement "a transform precoder on each cell in the first cell set is disabled" comprises: for each cell in the first cell set, the transform precoder is disabled.

As one embodiment, the statement "a transform precoder on each cell in the first cell set is disabled" comprises: for an active uplink BWP of each cell in the first cell set, the transform precoder is disabled.

As one embodiment, the statement "a transform precoder on each cell in the first cell set is disabled" comprises: for PUSCH sending on each cell in the first cell set, the transform precoder is disabled.

As one embodiment, the statement "a transform precoder on each cell in the first cell set is disabled" comprises: for a PUSCH scheduled by a first-type signaling on each cell in the first cell set, the transform precoder is disabled.

As one embodiment, the statement "a transform precoder on each cell in the first cell set is disabled" comprises: each parameter in a first parameter set is respectively a parameter in a configuration of an active uplink BWP of one cell in the first cell set, and each parameter in the first parameter set indicates disabling the transform precoder.

As one embodiment, the statement "a transform precoder on each cell in the first cell set is disabled" comprises: the transform precoder is configured to be disabled in a configuration of an active uplink BWP of each cell in the first cell set.

As one embodiment, the statements "a transform precoder on each cell in the first cell set is disabled" and "for each cell in the first cell set, a transform precoder is disabled" in the present application are equivalent or interchangeable.

As one embodiment, the statements "a transform precoder on each cell in the first cell set is disabled" and "for an active uplink BWP of each cell in the first cell set, a transform precoder is disabled" in the present application are equivalent or interchangeable.

As one embodiment, the statements "a transform precoder on each cell in the first cell set is disabled" and "for PUSCH sending on each cell in the first cell set, a transform precoder is disabled" in the present application are equivalent or interchangeable.

As one embodiment, the statements "a transform precoder on each cell in the first cell set is disabled" and "for a PUSCH scheduled by a first-type signaling on each cell in the first cell set, a transform precoder is disabled" in the present application are equivalent or interchangeable.

As one embodiment, the statements "a transform precoder on each cell in the first cell set is disabled" and "each parameter in a first parameter set is respectively a parameter in a configuration of an active uplink BWP of one cell in the first cell set, and each parameter in the first parameter set indicates disabling the transform precoder" in the present application are equivalent or interchangeable.

As one embodiment, the statements "a transform precoder on each cell in the first cell set is disabled" and "a transform precoder is configured to be disabled in a configuration of an active uplink BWP of each cell in the first cell set" in the present application are equivalent or interchangeable.

As one embodiment, when the transform precoder on each cell in the first cell set is disabled, the number of bits of the first domain in the first signaling is equal to 1.

As one embodiment, when the transform precoder is disabled on at least one cell in the first cell set, the number of bits of the first domain in the first signaling is equal to 1.

As one embodiment, when the transform precoder on each cell in the first cell set is disabled, the number of bits of the first domain in the first signaling is greater than 0.

As one embodiment, when the transform precoder is disabled on at least one cell in the first cell set, the number of bits of the first domain in the first signaling is greater than 0.

As one embodiment, the statement "a transform precoder is disabled on at least one cell in the first cell set" comprises: for at least one cell in the first cell set, the transform precoder is disabled.

As one embodiment, the statements "a transform precoder is disabled on at least one cell in the first cell set" and "for at least one cell in the first cell set, a transform precoder is disabled" in the present application are equivalent or interchangeable.

As one embodiment, when a transform precoder on any cell in the first cell set is disabled, the number of bits of the first domain in the first signaling is greater than 0.

### Embodiment 8

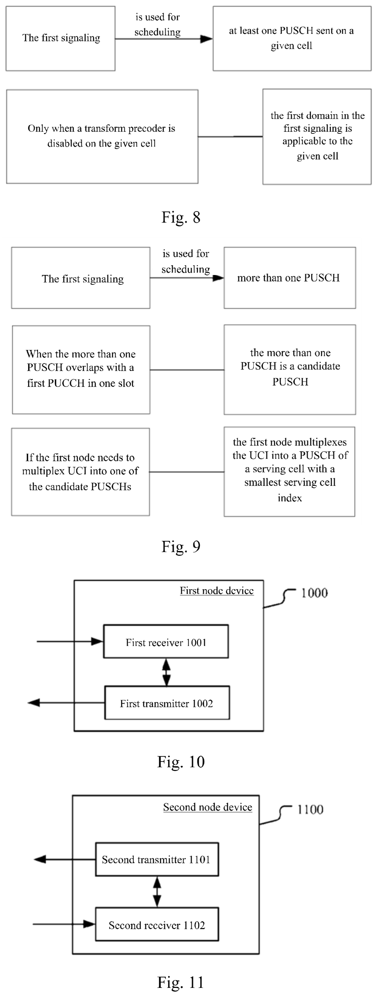

Embodiment 8 illustrates a schematic diagram of relationships among a first signaling, a first domain, and a given cell according to one embodiment of the present application, as shown in FIG. 8.

In Embodiment 8, the given cell is one cell in a first cell set, and the first signaling is used for scheduling at least one PUSCH sent on the given cell; and only when a transform precoder on the given cell is disabled, the first domain in the first signaling is applicable to the given cell.

As one embodiment, the given cell is any cell in the first cell set.

As one embodiment, the given cell is a cell with the greatest serving cell index in the first cell set.

As one embodiment, the given cell is a cell with the smallest serving cell index in the first cell set.

As one embodiment, the given cell is one cell in the first cell set, and a given PUSCH is a PUSCH scheduled by the first signaling and sent on the given cell; and only when the transform precoder on the given cell is disabled, the first domain in the first signaling is applicable to the given PUSCH.

As one embodiment, the given cell is one cell in the first cell set, and a given PUSCH is a PUSCH scheduled by the first signaling and sent on the given cell; and when the transform precoder on the given cell is disabled, the first domain in the first signaling is applicable to the given PUSCH.

As one embodiment, the given cell is one cell in the first cell set, and a given PUSCH is a PUSCH scheduled by the first signaling and sent on the given cell; and when the transform precoder on the given cell is enabled, the first domain in the first signaling is not applicable to the given PUSCH.

As one embodiment, the statement "applicable to the given PUSCH" comprises: applicable to a DMRS corresponding to the given PUSCH.

As one embodiment, the statement "applicable to the given PUSCH" comprises: used for sequence generation of a DMRS corresponding to the given PUSCH.

As one embodiment, the statement "applicable to the given PUSCH" means: applicable to a DMRS corresponding to the given PUSCH.

As one embodiment, the statement "applicable to the given PUSCH" means: used for sequence generation of a DMRS corresponding to the given PUSCH.

As one embodiment, a given cell is one cell in the first cell set, and the first signaling is used for scheduling at least one PUSCH sent on the given cell; and only when a transform precoder on the given cell is disabled, the first domain in the first signaling is applicable to the given cell.

As one embodiment, a given cell is one cell in the first cell set, and the first signaling is used for scheduling at least one PUSCH sent on the given cell; and when the transform precoder is disabled on the given cell, the first domain in the first signaling is applicable to the given cell.

As one embodiment, a given cell is one cell in the first cell set, and the first signaling is used for scheduling at least one PUSCH sent on the given cell; and when the transform precoder is enabled on the given cell, the first domain in the first signaling is not applicable to the given cell.

### Embodiment 9

Embodiment 9 illustrates an illustrative schematic diagram of UCI multiplexing related to more than one PUSCH scheduled by a first signaling according to one embodiment of the present application, as shown in FIG. 9.

In Embodiment 9, the first signaling is used for scheduling more than one PUSCH; when the more than one PUSCH overlaps with the first PUCCH in one slot, the more than one PUSCH is candidate PUSCHs; the first PUCCH carries UCI; and if the first node is to multiplex UCI into one of the candidate PUSCHs, the first node multiplexes the UCI into the PUSCH of a serving cell with the smallest serving cell index.

As one embodiment, the serving cell index is ServCellIndex.

As one embodiment, the serving cell index is used for uniquely identifying a serving cell.

As one embodiment, a condition for UCI multiplexing is met.

As one embodiment, timeline conditions for UCI multiplexing are met.

As one embodiment, conditions for UCI multiplexing in section 9.2.5 in 3GPP TS 38.213 are met.

As one embodiment, one candidate PUSCH is a PUSCH that overlaps with the first PUCCH (Physical uplink control channel) in the one slot.

As one embodiment, the candidate PUSCH is defined for UCI multiplexing.

As one embodiment, the first signaling is used for scheduling more than one PUSCH; when multiple PUSCHs including the more than one PUSCH overlaps with a first PUCCH in one slot, the multiple PUSCHs are all candidate PUSCHs; the first PUCCH carries UCI; and if the first node is to multiplex UCI into one of the candidate PUSCHs, the first node multiplexes the UCI into the PUSCH of a serving cell with the smallest serving cell index.

As one embodiment, the multiple PUSCHs only comprise the more than one PUSCH.

As one embodiment, the multiple PUSCHs also comprise at least one PUSCH other than the more than one PUSCH.

As one embodiment, if the first node sends at least 2 PUSCHs in the one slot on a serving cell with the smallest serving cell index, the first node multiplexes the UCI into an earliest PUSCH sent in the one slot.

As one embodiment, the more than one PUSCH is respectively sent on different cells in the first cell set.

### Embodiment 10

Embodiment 10 illustrates a structural block diagram of a processing device in a first node device, as shown in FIG. 10. In FIG. 10, a processing device 1000 of the first node device comprises a first receiver 1001 and a first transmitter 1002.

As one embodiment, the first node device 1000 is a base station.

As one embodiment, the first node device 1000 is user equipment.

As one embodiment, the first node device 1000 is a relay node.

As one embodiment, the first node device 1000 is a vehicle-mounted communication device.

As one embodiment, the first node device 1000 is user equipment supporting V2X communication.

As one embodiment, the first node device 1000 is a relay node supporting V2X communication.

As one embodiment, the first node device 1000 is user equipment supporting operation on a high frequency spectrum.

As one embodiment, the first node device 1000 is user equipment supporting operation on a shared spectrum.

As one embodiment, the first node device 1000 is user equipment supporting XR services.

As one embodiment, the first node device 1000 is user equipment supporting multicast transmission.

As one embodiment, the first receiver 1001 comprises at least one of an antenna 452, a receiving device 454, a multi-antenna receiving processor 458, a receiving processor 456, a controller/processor 459, a memory 460, and a data source 467 in FIG. 4 of the present application.

As one embodiment, the first receiver 1001 comprises at least the first five of an antenna 452, a receiving device 454, a multi-antenna receiving processor 458, a receiving processor 456, a controller/processor 459, a memory 460, and a data source 467 in FIG. 4 of the present application.

As one embodiment, the first receiver 1001 comprises at least the first four of an antenna 452, a receiving device 454, a multi-antenna receiving processor 458, a receiving processor 456, a controller/processor 459, a memory 460, and a data source 467 in FIG. 4 of the present application.

As one embodiment, the first receiver 1001 comprises at least the first three of an antenna 452, a receiving device 454, a multi-antenna receiving processor 458, a receiving processor 456, a controller/processor 459, a memory 460, and a data source 467 in FIG. 4 of the present application.

As one embodiment, the first receiver 1001 comprises at least the first two of an antenna 452, a receiving device 454, a multi-antenna receiving processor 458, a receiving processor 456, a controller/processor 459, a memory 460, and a data source 467 in FIG. 4 of the present application.

As one embodiment, the first transmitter 1002 comprises at least one of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter 1002 comprises at least the first five of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter 1002 comprises at least the first four of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter 1002 comprises at least the first three of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter 1002 comprises at least the first two of an antenna 452, a transmitting device 454, a multi-antenna transmitting device processor 457, a transmitting processor 468, a controller/processor 459, a memory 460, and a data source 467 in FIG. 4 of the present application.

As one embodiment, the first receiver 1001 receives a first signaling; and the first transmitter 1002 sends a PUSCH on at least one cell in the first cell set, wherein the first signaling is used for scheduling the sent PUSCH; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

As one embodiment, when a transform precoder on any cell in the first cell set is disabled, the number of bits of the first domain in the first signaling is equal to 1.

As one embodiment, when the transform precoder on each cell in the first cell set is disabled, the number of bits of the first domain in the first signaling is greater than 0.

As one embodiment, the first domain is a DMRS sequence initialization domain.

As one embodiment, a given cell is one cell in the first cell set, and the first signaling is used for scheduling at least one PUSCH sent on the given cell; and only when a transform precoder on the given cell is disabled, the first domain in the first signaling is applicable to the given cell.

As one embodiment, a given cell is one cell in the first cell set, and the first signaling is used for scheduling at least one PUSCH sent on the given cell; and when a transform precoder on at least one cell in the first cell set is disabled and a transform precoder on the given cell is enabled, the number of bits of the first domain in the first signaling is equal to 1, and the first domain in the first signaling is not applicable to the given cell.

As one embodiment, the first signaling is used for scheduling more than one PUSCH; when the more than one PUSCH overlaps with the first PUCCH in one slot, the more than one PUSCH is candidate PUSCHs; the first PUCCH carries UCI; and if the first node is to multiplex UCI into one of the candidate PUSCHs, the first node multiplexes the UCI into the PUSCH of a serving cell with the smallest serving cell index.

### Embodiment 11

Embodiment 11 illustrates a structural block diagram of a processing device in a second node device, as shown in FIG. 11. In FIG. 11, a processing device 1100 of the second node device comprises a second transmitter 1101 and a second receiver 1102.

As one embodiment, the second node device 1100 is user equipment.

As one embodiment, the second node device 1100 is a base station.

As one embodiment, the second node device 1100 is a satellite device.

As one embodiment, the second node device 1100 is a relay node.

As one embodiment, the second node device 1100 is a vehicle-mounted communication device.

As one embodiment, the second node device 1100 is user equipment supporting V2X communication.

As one embodiment, the second node device 1100 is a device supporting operation on a high-frequency spectrum.

As one embodiment, the second node device 1100 is a device supporting operation on a shared spectrum.

As one embodiment, the second node device 1100 is a device supporting an XR service.

As one embodiment, the second node device 1100 is one of a test apparatus, a test device, and a test instrument.

As one embodiment, the second transmitter 1101 comprises at least one of an antenna 420, a transmitting device 418, a multi-antenna transmitting processor 471, a transmitting processor 416, a controller/processor 475, and a memory 476 in FIG. 4 of the present application.

As one embodiment, the second transmitter 1101 comprises at least the first five of an antenna 420, a transmitting device 418, a multi-antenna transmitting processor 471, a transmitting processor 416, a controller/processor 475, and a memory 476 in FIG. 4 of the present application.

As one embodiment, the second transmitter 1101 comprises at least the first four of an antenna 420, a transmitting device 418, a multi-antenna transmitting processor 471, a transmitting processor 416, a controller/processor 475, and a memory 476 in FIG. 4 of the present application.

As one embodiment, the second transmitter 1101 comprises at least the first three of an antenna 420, a transmitting device 418, a multi-antenna transmitting processor 471, a transmitting processor 416, a controller/processor 475, and a memory 476 in FIG. 4 of the present application.

As one embodiment, the second transmitter 1101 comprises at least the first two of an antenna 420, a transmitting device 418, a multi-antenna transmitting processor 471, a transmitting processor 416, a controller/processor 475, and a memory 476 in FIG. 4 of the present application.

As one embodiment, the second receiver 1102 comprises at least one of an antenna 420, a receiving device 418, a multi-antenna receiving processor 472, a receiving processor 470, a controller/processor 475, and a memory 476 in FIG. 4 of the present application.

As one embodiment, the second receiver 1102 comprises at least the first five of an antenna 420, a receiving device 418, a multi-antenna receiving processor 472, a receiving processor 470, a controller/processor 475, and a memory 476 in FIG. 4 of the present application.

As one embodiment, the second receiver 1102 comprises at least the first four of an antenna 420, a receiving device 418, a multi-antenna receiving processor 472, a receiving processor 470, a controller/processor 475, and a memory 476 in FIG. 4 of the present application.

As one embodiment, the second receiver 1102 comprises at least the first three of an antenna 420, a receiving device 418, a multi-antenna receiving processor 472, a receiving processor 470, a controller/processor 475, and a memory 476 in FIG. 4 of the present application.

As one embodiment, the second receiver 1102 comprises at least the first two of an antenna 420, a receiving device 418, a multi-antenna receiving processor 472, a receiving processor 470, a controller/processor 475, and a memory 476 in FIG. 4 of the present application.

As one embodiment, the second transmitter 1101 sends a first signaling; and the second receiver 1102 receives a PUSCH on at least one cell in a first cell set, wherein the first signaling is used for scheduling the PUSCH on the at least one cell in the first cell set; the first cell set comprises a plurality of cells, and the number of bits of a first domain in the first signaling is related to the first cell set; and when a transform precoder on each cell in the first cell set is enabled, the number of bits of the first domain in the first signaling is equal to 0.

As one embodiment, when a transform precoder on any cell in the first cell set is disabled, the number of bits of the first domain in the first signaling is equal to 1.

As one embodiment, when the transform precoder on each cell in the first cell set is disabled, the number of bits of the first domain in the first signaling is greater than 0.

As one embodiment, the first domain is a DMRS sequence initialization domain.

As one embodiment, the given cell is one cell in the first cell set, and the first signaling is used for scheduling at least one PUSCH on the given cell; and only when a transform precoder on the given cell is disabled, the first domain in the first signaling is applicable to the given cell.

As one embodiment, the given cell is one cell in the first cell set, and the first signaling is used for scheduling at least one PUSCH on the given cell; and when a transform precoder on at least one cell in the first cell set is disabled and a transform precoder on the given cell is enabled, the number of bits of the first domain in the first signaling is equal to 1, and the first domain in the first signaling is not applicable to the given cell.

As one embodiment, the first signaling is used for scheduling more than one PUSCH; when the more than one PUSCH overlaps with the first PUCCH in one slot, the more than one PUSCH is candidate PUSCHs; the first PUCCH carries UCI; and if a receiving end of the first signaling needs to multiplex UCI into one of the candidate PUSCHs, the receiving end of the first signaling multiplexes the UCI into the PUSCH of a serving cell with a smallest serving cell index.

Those ordinarily skilled in the art can understand that all or part of the steps in the above method can be completed by instructing relevant hardware through a program, and the program can be stored in a computer-readable storage medium, such as a read-only memory, a hard disk or an optical disk, etc. Optionally, all or part of the steps in the above embodiment can also be implemented using one or more integrated circuits. Accordingly, each module unit in the above embodiment can be implemented in the form of hardware or in the form of a software function module. The present application is not limited to any specific form of software and hardware combination. The first node device in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The second node device in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircraft and other wireless communication devices. The user equipment or UE or terminal in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled airplanes and other wireless communication devices. The base station device or base station or network-side device in the present application comprises but is not limited to macrocell base stations, microcell base stations, home base stations, relay base stations, eNBs, gNBs, transmission receiving points TRPs, GNSS, relay satellites, satellite base stations, air base stations, test apparatuses, test devices, test instruments and other devices.

Those skilled in the art should understand that the present invention can be implemented in other specified forms without departing from its core or basic features. Therefore, the embodiments disclosed at present should be regarded as descriptive rather than restrictive in any way. The scope of the present invention is determined by the appended claims rather than the preceding description, and all changes within their equivalent meanings and areas are deemed to be included therein.

## Claims

1. A first node used in wireless communication, comprising:
a first receiver for receiving a first signaling; and
a first transmitter for sending a PUSCH on at least one cell in a first cell set,
wherein the first signaling is used for scheduling the sent PUSCH; the first cell set comprises a plurality of cells, the number of bits of a first domain in the first signaling is related to the first cell set, and the first domain is a DMRS sequence initialization domain; and when a transform precoder on each cell in the first cell set is enabled, the number of bits of the first domain in the first signaling is equal to 0.

2. The first node according to claim 1, wherein when the transform precoder on any cell in the first cell set is disabled, the number of bits of the first domain in the first signaling is equal to 1.

3. The first node according to claim 1 or 2, wherein the first signaling is a DCI format.

4. The first node according to any one of claims 1 to 3, wherein based on scheduling of the first signaling, the first node sends at least one PUSCH on each cell in more than one cell in the first cell set.

5. The first node according to any one of claims 1 to 4, wherein a given cell is one cell in the first cell set, and the first signaling is used for scheduling at least one PUSCH sent on the given cell; and only when the transform precoder on the given cell is disabled, the first domain in the first signaling is applicable to the given cell.

6. The first node according to any one of claims 1 to 5, wherein the given cell is one cell in the first cell set, and the first signaling is used for scheduling at least one PUSCH sent on the given cell; and when a transform precoder on at least one cell in the first cell set is disabled and a transform precoder on the given cell is enabled, the number of bits of the first domain in the first signaling is equal to 1, and the first domain in the first signaling is not applicable to the given cell.

7. The first node according to any one of claims 1 to 6, wherein the first signaling is used for scheduling more than one PUSCH; when the more than one PUSCH overlaps with the first PUCCH in one slot, the more than one PUSCH is candidate PUSCHs; the first PUCCH carries UCI; and if the first node is to multiplex UCI into one of the candidate PUSCHs, the first node multiplexes the UCI into a PUSCH of a serving cell with the smallest serving cell index.

8. The first node according to any one of claims 1 to 7, wherein the given cell is one cell in the first cell set, and the first signaling is used for scheduling at least one PUSCH sent on the given cell; for PUSCH transmission on the given cell, when corresponding transform precoding is not enabled: for UL (Uplink) transmission based on partial coherent and non-coherent codebooks, an actual number of UL phase-tracking reference signal (PT-RS) ports is determined based on TPMI and/or the number of layers indicated by a second domain in the first signaling; and the second domain is a precoding information and number of layers field.

9. A second node used in wireless communication, comprising:
a second transmitter for sending a first signaling; and
a second receiver for receiving a PUSCH on at least one cell in a first cell set,
wherein the first signaling is used for scheduling the PUSCH on the at least one cell in the first cell set; the first cell set comprises a plurality of cells, the number of bits of a first domain in the first signaling is related to the first cell set, and the first domain is a DMRS sequence initialization domain; and when a transform precoder on each cell in the first cell set is enabled, the number of bits of the first domain in the first signaling is equal to 0.

10. The second node according to claim 9, wherein when a transform precoder on any cell in the first cell set is disabled, the number of bits of the first domain in the first signaling is equal to 1.

11. The second node according to claim 9 or 10, wherein the first signaling is a DCI format.

12. The second node according to any one of claims 9 to 11, wherein a given cell is one cell in the first cell set, and the first signaling is used for scheduling at least one PUSCH on the given cell; and only when the transform precoder on the given cell is disabled, the first domain in the first signaling is applicable to the given cell.

13. The second node according to any one of claims 9 to 12, wherein a given cell is one cell in the first cell set, and the first signaling is used for scheduling at least one PUSCH on the given cell; and when a transform precoder on at least one cell in the first cell set is disabled and a transform precoder on the given cell is enabled, the number of bits of the first domain in the first signaling is equal to 1, and the first domain in the first signaling is not applicable to the given cell.

14. The second node according to any one of claims 9 to 13, wherein the first signaling is used for scheduling more than one PUSCH; when the more than one PUSCH overlaps with the first PUCCH in one slot, the more than one PUSCH is candidate PUSCHs; the first PUCCH carries UCI; and if a receiving end of the first signaling is to multiplex UCI into one of the candidate PUSCHs, the receiving end of the first signaling multiplexes the UCI into a PUSCH of the serving cell with the smallest serving cell index.

15. A method used in a first node for wireless communication, comprising:
receiving a first signaling; and
sending a PUSCH on at least one cell in a first cell set,
wherein the first signaling is used for scheduling the sent PUSCH; the first cell set comprises a plurality of cells, the number of bits of a first domain in the first signaling is related to the first cell set, and the first domain is a DMRS sequence initialization domain; and when a transform precoder on each cell in the first cell set is enabled, the number of bits of the first domain in the first signaling is equal to 0.

16. The method used in the first node according to claim 15, wherein when the transform precoder on any cell in the first cell set is disabled, the number of bits of the first domain in the first signaling is equal to 1.

17. The method used in the first node according to claim 15 or 16, wherein the first signaling is a DCI format.

18. The method used in the first node according to any one of claims 15 to 17, wherein based on scheduling of the first signaling, the first node sends at least one PUSCH on each cell in more than one cell in the first cell set.

19. The method used in the first node according to any one of claims 15 to 18, wherein a given cell is one cell in the first cell set, and the first signaling is used for scheduling at least one PUSCH sent on the given cell; and only when the transform precoder on the given cell is disabled, the first domain in the first signaling is applicable to the given cell.

20. The method used in the first node according to any one of claims 15 to 19, wherein a given cell is one cell in the first cell set, and the first signaling is used for scheduling at least one PUSCH sent on the given cell; and when a transform precoder on at least one cell in the first cell set is disabled and a transform precoder on the given cell is enabled, the number of bits of the first domain in the first signaling is equal to 1, and the first domain in the first signaling is not applicable to the given cell.

21. The method used in the first node according to any one of claims 15 to 20, wherein the first signaling is used for scheduling more than one PUSCH; when the more than one PUSCH overlaps with the first PUCCH in one slot, the more than one PUSCH is candidate PUSCHs; the first PUCCH carries UCI; and if the first node is to multiplex UCI into one of the candidate PUSCHs, the first node multiplexes the UCI into a PUSCH of a serving cell with the smallest serving cell index.

22. The method used in the first node according to any one of claims 15 to 21, wherein a given cell is one cell in the first cell set, and the first signaling is used for scheduling at least one PUSCH sent on the given cell; and for PUSCH transmission on the given cell, when corresponding transform precoding is not enabled: for UL (Uplink) transmission based on partial coherent and non-coherent codebooks, an actual number of UL phase-tracking reference signal (PT-RS) ports is determined based on TPMI and/or the number of layers indicated by a second domain in the first signaling; and the second domain is a precoding information and number of layers field.

23. A method used in a second node for wireless communication, comprising:
sending a first signaling; and
receiving a PUSCH on at least one cell in a first cell set,
wherein the first signaling is used for scheduling the PUSCH on the at least one cell in the first cell set; the first cell set comprises a plurality of cells, the number of bits of a first domain in the first signaling is related to the first cell set, and the first domain is a DMRS sequence initialization domain; and when a transform precoder on each cell in the first cell set is enabled, the number of bits of the first domain in the first signaling is equal to 0.

24. The method used in the second node according to claim 23, wherein when the transform precoder on any cell in the first cell set is disabled, the number of bits of the first domain in the first signaling is equal to 1.

25. The method used in the second node according to claim 23 or 24, wherein the first signaling is a DCI format.

26. The method used in the second node according to any one of claims 23 to 25, wherein a given cell is one cell in the first cell set, and the first signaling is used for scheduling at least one PUSCH on the given cell; and only when the transform precoder on the given cell is disabled, the first domain in the first signaling is applicable to the given cell.

27. The method used in the second node according to any one of claims 23 to 26, wherein a given cell is one cell in the first cell set, and the first signaling is used for scheduling at least one PUSCH on the given cell; and when a transform precoder on at least one cell in the first cell set is disabled and a transform precoder on the given cell is enabled, the number of bits of the first domain in the first signaling is equal to 1, and the first domain in the first signaling is not applicable to the given cell.

28. The method used in the second node according to any one of claims 23 to 27, wherein the first signaling is used for scheduling more than one PUSCH; when the more than one PUSCH overlaps with the first PUCCH in one slot, the more than one PUSCH is candidate PUSCHs; the first PUCCH carries UCI; and if a receiving end of the first signaling is to multiplex UCI into one of the candidate PUSCHs, the receiving end of the first signaling multiplexes the UCI into a PUSCH of the serving cell with the smallest serving cell index.
